(19) Europäisches Patentamt
European Patent Office
Office européen des brevets

(11)  EP 3 104 995 B1

(12)  **EUROPEAN PATENT SPECIFICATION**

(45) Date of publication and mention
of the grant of the patent:
**11.12.2019   Bulletin 2019/50**

(21) Application number: **15749700.9**

(22) Date of filing: **12.02.2015**

(51) Int Cl.:
*B22F 3/02* *(2006.01)*        *B22F 3/17* *(2006.01)*
*B22F 3/18* *(2006.01)*        *B22F 3/20* *(2006.01)*
*B22F 7/08* *(2006.01)*        *C22C 32/00* *(2006.01)*

(86) International application number:
**PCT/US2015/015548**

(87) International publication number:
**WO 2015/123380 (20.08.2015 Gazette 2015/33)**

(54)  **METHOD OF MAKING A METAL MATRIX COMPOSITE MATERIAL**

VERFAHREN ZUR HERSTELLUNG EINES METALL-MATRIX-VERBUNDSTOFFS

PROCÉDÉ DE PRÉPARATION D'UN MATÉRIAU COMPOSITE À MATRICE MÉTALLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.02.2014   US 201461939357 P**

(43) Date of publication of application:
**21.12.2016   Bulletin 2016/51**

(73) Proprietor: **Ceradyne Inc.**
**Costa Mesa, California 92626 (US)**

(72) Inventors:
• **LANDRY-DÉSY, Étienne**
**Saint Paul, Minnesota 55133-3427 (US)**
• **GIASSON, Geneviéve**
**Saint Paul, Minnesota 55133-3427 (US)**

• **NAWAZ, Muhammad Zubair**
**Saint Paul, Minnesota 55133-3427 (US)**

(74) Representative: **Mathys & Squire**
**Mathys & Squire Europe LLP**
**Maximilianstraße 35**
**Eingang A**
**80539 München (DE)**

(56) References cited:
EP-A1- 1 837 103        WO-A1-2009/054075
CH-A5- 643 390          CN-A- 102 676 858
DE-A1- 2 643 444        GB-A- 1 516 025
US-A- 5 700 962         US-A1- 2004 141 866
US-A1- 2005 106 056     US-B2- 7 625 520
US-B2- 7 854 886        US-B2- 7 998 401

**Description**

**TECHNICAL FIELD**

A process for making a metal matrix composite is described. In one embodiment, the metal matrix composite is used as a neutron shielding material.

**BACKGROUND**

Metal matrix composite (MMC) materials, comprising a metal and a ceramic, increasingly have been used as neutron absorber materials in the nuclear industry for storage and transportation of fresh and spent fuel.

WO 2009/054075 discloses a method of producing an aluminum matrix composite material comprising the steps of mixing an aluminum powder and a ceramic powder to prepare a mixed powder; providing a lower casing made of aluminum and formed in a hollow rectangular parallelepiped shape having an open top, and a closing member made of aluminum and formed in a shape adapted to hermetically close the open top of the lower casing; packing the mixed powder into the lower casing; closing the open top of the lower casing filled with the mixed powder, by the closing member, to prepare a pre-rolling assembly having the mixed powder hermetically sealed therein; preheating the pre-rolling assembly; and rolling the preheated assembly to obtain the aluminum matrix composite material, where the aluminum matrix composite material includes a pair of metal plates having the mixed powder therebetween.

**SUMMARY**

There is a desire for MMC articles having increased final density and/or higher ceramic content, resulting in, in at least one embodiment, improved performance. There is also a need for improved processing and/or reducing manufacturing costs.

In one aspect, a method for making a metal matrix composite material is provided comprising:

(a) forming a metal box comprising a bottom forming plate having a length and a width, a first pair of side forming plates having a length and a height, and a second pair of side forming plates having a width and a height;
(b) mixing a metal powder and a ceramic powder to prepare a mixed powder;
(c) over-filling the metal box with the mixed powder, wherein prior to said over-filling a riser frame or sleeve is placed over and/or around the metal box to contain the extra mixed powder;
(d) after said over-filling, compacting the mixed powder in the metal box by applying pressure or force of at least 13.8 MPa (1TSI) to provide the metal box comprising a compacted powder preform, wherein the mixed powder is not subjected to sintering and the compacted powder preform has a density ratio of at least 0.65 where the density ratio is calculated by divided the weight of the mixed powder by the volume of the metal box then dividing by the theoretical density of the mixed powder assuming a fully dense material;
(e) removing riser frame or sleeve and then disposing a top forming plate onto the metal box in solid abutment against the metal box comprising the compacted powder preform and sealing around its edges to produce a pre-rolling assembly; and
(f) performing hot working on the pre-rolling assembly to obtain the metal matrix composite material with a metal cladding.

The above summary is not intended to describe each embodiment. The details of one or more embodiments of the invention are also set forth in the description below. Other features, objects, and advantages will be apparent from the description and from the claims.

**BRIEF DESCRIPTION OF THE DRAWINGS**

In the accompanying drawings:

Fig. 1 is a perspective view of pre-rolling assembly 10
Fig. 2 is a perspective view of metal box 20, depicting the length (l), width (w) and height (h);
Fig. 3 is a side view of compaction assembly 30; and
Fig. 4 are micrographs of the metal matrix composite material compacted at (A) 0 TSI, (B) 3 TSI, and (C) 7 TSI.

**DETAILED DESCRIPTION**

As used herein, the term
"a", "an", and "the" are used interchangeably and mean one or more; and
"and/or" is used to indicate one or both stated cases may occur, for example A and/or B includes, (A and B) and (A or B).

Also herein, recitation of ranges by endpoints includes all numbers subsumed within that range (e.g., 1 to 10 includes 1.4, 1.9, 2.33, 5.75, 9.98, etc.).

Also herein, recitation of "at least one" includes all numbers of one and greater (e.g., at least 2, at least 4, at least 6, at least 8, at least 10, at least 25, at least 50, at least 100, etc.).

In recent years, aluminum composite materials have been developed, not only for their strength and low density, but for other uses requiring a high Young's modulus, wear resistance, heat dissipation, corrosion resistance low thermal expansion, and neutron absorbing ability. In general, each function can be increased by increasing the amount of ceramics having the required function, but simply increasing the amounts can cause the workability, extrusion ability, rolling ability, ductility, and forging ability to be largely reduced.

Therefore, methods of pre-forming the ceramics, impregnating with an aluminum melt, then evenly dispersing high-concentration ceramics in the matrix phase have been contemplated, but this carries the drawback of possible defects occurring due to inadequate penetration of the melt and shrinkage forming during solidification. Further, agglomeration and segration of the ceramic in the aluminum is often present.

U.S. Pat. No. 7,998,401 (Okaniwa et al.) discloses an alternative method of increasing the ceramic content in an MMC, which is said to be easy to produce. Okaniwa et al. discloses electric pressure sintering of an aluminum/ceramic powder mix within a metal sheet and then subjecting this metal clad material to a plastic working step.

In the present disclosure, it has discovered that by compacting a mixed powder comprising metal powder and ceramic powder, high densities of powder can be achieved while minimizing material deformation and spreading during hot forming, resulting in, for example, a material that has increased performance efficiency.

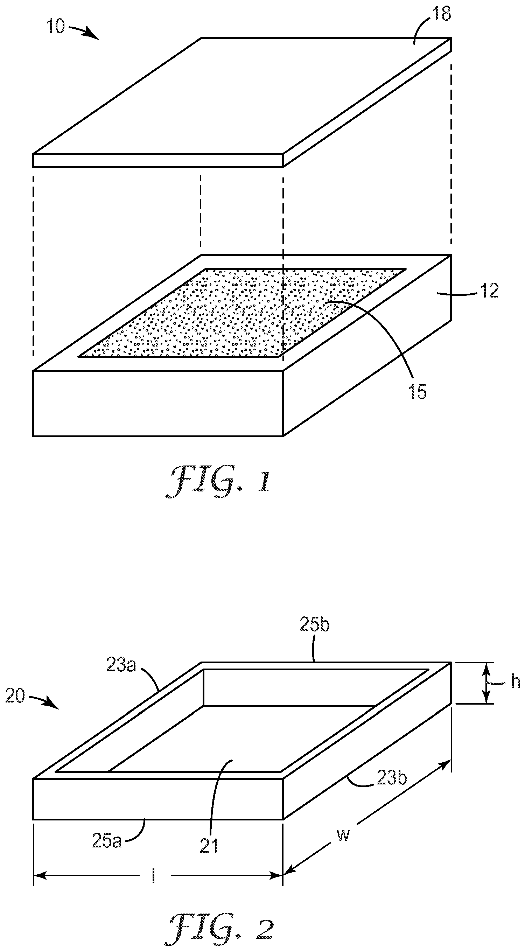

The present disclosure can be understood by reference to Figure 1. Shown in Fig. 1 is pre-rolling assembly 10 comprising metal box 12, compacted powder preform 15, and top forming plate 18. The pre-rolling assembly is subsequently rolled to form an encased metal matrix composite.

Metal Box

The metal box comprises 5 metal sides: a bottom forming plate, a first pair of side forming plates, and a second pair of side forming plates. The metal box may be fabricated from five individual metal pieces or less. For example, the metal box could be fashioned from 2 metal pieces: a single piece forming the sidewalls and a bottom piece.

The forming plates are made of metal. The metal used is not particularly limited as long as the metal excels in adhesion to the powder material and is suitable for hot rolling, such metals include: aluminum, magnesium, and stainless steel. Exemplary metals include, for example, pure aluminum (AA1100, AA1050, AA 1070, etc.); aluminum alloy materials such as Al-Cu alloy (AA2017 etc.), Al-Mg alloy (AA5052 etc.), Al-Mg-Si alloy (AA6061 etc.), Al-Zn-Mg alloy (AA7075 etc.) and Al-Mn alloy; magnesium alloy materials such as Mg-Al-Zn-Mn (AZ31, AZ61, etc); and stainless steel alloy material such as Fe-Cr (SAE 304, 316, 316L,etc).

The metal box primarily functions as a container to hold the compacted powder as it is worked. The metal selected should be determined in consideration of the desired properties, cost, and the like. For example, when wishing to improve the workability and heat dissipation ability, pure aluminum is preferable. Pure aluminum is also preferable in terms of contamination control for nuclear application and raw material cost as compared with aluminum alloys. When wishing to improve the strength or workability, an Al-Mg alloy (AA5052 etc.) is preferable.

Metal Powder

A mixed powder comprising a metal powder and a ceramic powder is contained within the metal box. Typically the metal powder is aluminum, however other metal powders may be used including magnesium or stainless steel. Exemplary types of metal powders include pure aluminum (aluminum powder with purity of at least 99.0%, e.g., AA1100, AA1050, AA1070 etc.), or an aluminum alloy containing aluminum and 0.2 to 2% by mass of another metal. Such alloys include: Al-Cu alloys (AA2017 etc.), Al-Mg alloys (AA5052 etc.), Al-Mg-Si alloys (AA6061 etc.), Al-Zn-Mg alloys (AA7075 etc.) and Al-Mn alloys, either alone or as a mixture of two or more.

The composition of the metal powder to be selected can be determined in consideration of, for example, the desired properties, corrosion resistance, contamination control, deformation resistance in hot working, amount of ceramic particles mixed, and raw material costs. For example, when wishing to increase the workability or heat dissipation, a pure aluminum powder (such as a series AA1XXX aluminum where X is a number) is preferable. A pure aluminum powder is also advantageous in terms of raw material costs as compared with the case of aluminum alloy powders. As the pure aluminum powder, it is preferable to use one with a purity of at least 99.0% by mass (commercially available pure aluminum powders usually have a purity of at least 99.7% by mass).

When wishing to obtain neutron absorbing ability, a boron compound is used as the ceramic particles to be described below, but when wishing to further increase the resulting neutron absorbing ability, it is preferable to add 1-50% by mass of one type of element providing neutron absorbing ability such as hafnium (Hf), samarium (Sm) or gadolinium (Gd) to the aluminum powder. Additionally, when high-temperature strength is required, it is possible to add at least one element chosen from titanium (Ti), vanadium (V), chrome (Cr), manganese (Mn), iron (Fe), copper (Cu), nickel (Ni), molybdenum (Mo), niobium (nb), zirconium (Zr) and strontium (Sr), and when room-temperature strength is required, it is possible to add at least one element chosen from silicon (Si), copper (Cu), magnesium (Mg) and zinc (Zn), at a proportion of 2% by mass or less for each element, and a total of 15% by mass or less.

While the average particle size of the metal powder is not particularly restricted, the metal powder should generally be at most about 500 $\mu$m (micrometers), 150 $\mu$m, or even 60 $\mu$m or less. While the lower limit of the average particle size is not particularly limited as long as producible, the powder should generally be at least 1 $\mu$m, 5 $\mu$m, 10 $\mu$m, or even 20 $\mu$m. For the purposes of the present disclosure, the average particle size shall refer to the $D_{50}$ value measured by laser diffraction particle size distribution. The shape of the metal powder is also not limited, and may be any of teardrop-shaped, spherical, ellipsoid, flake-shaped or irregular.

In one embodiment of the present disclosure, the metal powder has a monomodal particle size distribution. In another embodiment of the present disclosure, the metal powder has a multimodal particle size distribution (e.g., bimodal, trimodal, etc.). In one embodiment, the metal powder has a bimodal distribution, wherein the ratio of the average particle of the first mode (comprising the smaller particles) to the second mode (comprising the larger particles) is at least 1:2, 1:3, 1:5, 1:7, 1:11, or even 1:20. The widths of the modes may be wide or narrow.

The method of production of the metal powder is not limited, and it may be produced by publicly known methods of production of metallic powders. The method of production can, for example, be by atomization, melt-spinning, rotating disk, rotating electrode or other rapid-cooling solidification method, but an atomization method, particularly an inert gas atomization method, wherein a powder is produced by atomizing a melt is preferable for industrial production.

Ceramic Powder

The ceramic powder is mixed with the metal powder to eventually form the metal matrix composite. Exemplary ceramic powders include $Al_2O_3$, SiC or $B_4C$, BN, aluminum nitride and silicon nitride. These may be used alone or as a mixture, and selected depending on the intended use of the composite material.

The composition of the ceramic powder to be selected can be determined in consideration of, for example, the desired properties, the amount of ceramic particles used, and the cost. When wishing to obtain neutron absorbing ability, typically a boron compound is used for the ceramic particle.

Boron (B) has the ability to absorb neutrons, so the MMC of the present disclosure can be used as a neutron-absorbing material if boron-containing ceramic particles are used. In that case, the boron-containing ceramic can be, for example, $B_4C$, $TiB_2$, $B_2O_3$, BN FeB or $FeB_2$, used either alone or as a mixture. In particular, it is preferable to use boron carbide $B_4C$ which contains large amounts of $^{10}B$ which is an isotope of B that absorbs neutrons well.

The method of production of the ceramic powder is not limited, and it may be produced by publicly known methods of production of ceramic powders. After the systhesis of the ceramic, a finishing process (such as jet milling or ball milling) may be used to adjust the particle size. A finishing process that leads to an ellipsoid-shaped particle or spherical-shaped particles is preferred.

While the average particle size of the ceramic particles is not particularly restricted, the ceramic powder should generally be at most about, 60 $\mu$m, 40 $\mu$m, or even 20 $\mu$m and at least 1 $\mu$m, 3 $\mu$m, or even 5 $\mu$m. If the average particle size is greater than 60 $\mu$m, coarse particles fragilize the metal matrix composite affecting mechanical properties. If the average particle size is smaller than 1 $\mu$m, then these fine powders may clump together, making it difficult to achieve an even mixture with the metal powder. For the purposes of the present invention, the average particle size shall refer to the $D_{50}$ value measured by laser diffraction particle size distribution measurement. The shape of the powder is also not limited, and may be any of spherical, ellipsoid, flake-shaped or irregular.

In one embodiment of the present disclosure, the ceramic powder has a monomodal particle size distribution. In another embodiment of the present disclosure, the ceraimc powder has a multimodal particle size distribution (e.g., bimodal, trimodal, etc.). In one embodiment, the ceramic powder has a bimodal distribution, wherein the average particle of the first mode (comprising the smaller particles) to the second mode (comprising the larger particles) is at least 1:2, 1:3, 1:5, 1:7, 1:11 or even 1:20... The widths of the modes may be wide or narrow.

Method of Making

The method for producing a metal matrix composite material according to the present disclosure comprises (a) forming a metal box comprising a bottom forming plate having a length and a width, a first pair of side forming plates having a length and a height, and a second pair of side forming plates having a width and a height; (b) mixing a metal powder and a ceramic powder to prepare a mixed powder; (c) over-filling the metal box with the mixed powder, wherein prior to said over-filling a riser frame or sleeve is placed over and/or around the metal box to contain the extra mixed powder; (d) after said over-filling, compacting the mixed powder in the metal box by applying pressure or force of at least 13.8 MPa (1 TSI) to provide the metal box comprising a compacted powder preform, wherein the mixed powder is not subjected to sintering and the compacted powder preform has a density ratio of at least 0.65 where the density ratio is calculated by dividing the weight of the mixed powder by the volume of the metal box then dividing by the theoretical density of the mixed powder assuming a fully dense material; (c) removing riser frame or sleeve and then disposing a top forming plate onto the metal box in solid abutment against the metal box comprising the compacted powder preform and sealing around its edges to produce an assembly; and (f) performing hot working on the assembly to obtain the metal matrix composite material with a metal cladding.

Making the box

The metal box may be formed from a plurality of plate forming members, or may be a single piece. In one embodiment, the metal box is made from a single piece of metal obtained by (i) cutting out the central portion of a metal plate material, or (ii) a hollow extruded material cut to an appropriate length, and then fashioning a bottom plate to the single piece of metal forming a box.

Shown in Fig. 2 is a schematic of metal box 20 comprising bottom forming plate 21, first pair of side forming plates, 23a and 23b, which are opposite one another, and second pair of side forming plates, 25a and 25b, which are also opposite one another. The bottom plate has a first thickness, a length and a width. The first pair of side forming plates have a second thickness, a length, and a height. The second pair of side forming plates have a third thickness, a width, and a height.

The metal forming plates can be sealed together to form a metal box. The sealing of the metal box may be continuous or discontinuous so long as the box is held together enabling it to contain the mixed powder described below even while the assembly is subjected to the hot rolling. Typically, such sealing materials include: a metal (e.g., metal inert gas welding such as tungsten inert gas welding; or friction stir welding). In one embodiment, a smooth welded junction is provided between the edges of the pieces. The weld can be formed by a continuous, neat, even flow. In one embodiment, no voids in the weld are permitted as this will mean a structural weakness in the box or ingot and cause it to break open during subsequent rolling.

The metal box has a length (l), width (w), and height (h) as shown in Fig. 2. The length and the width of the metal box are both greater than the height. It will be understood that boxes of different sizes may be employed and that subsequent operations may produce finished goods of different thicknesses.

Typically, the length of the box is not particularly limited as the hot working step is conducted along the length axis. Typically, the width of the box is limited by the length of the machinery used (e.g., rolls, size of extruder), which are used to flatten the article in the hot working step. In one embodiment, the length and width of the box are not the same. In one embodiment the length and width of the box are the same. Exemplary lengths include: at least 10 cm (centimeter), 15 cm, 25 cm, or even 50 cm; and no more than 1 m (meter), 2 m, 5 m, or even 10 m. Exemplary widths include: at least 5 cm, 10 cm, 15 cm, 25 cm or even 50 cm; and at most 50 cm, 100 cm, or even 200 cm.

The height of the metal box is typically limited by the dimensions of the hot working machinery (e.g., the rollers). Exemplary heights include: at most 600 mm (millimeter), 400 mm, 200 mm, 80 mm or even 50 mm; and at least 10 mm, 20 mm or even 30 mm.

In one embodiment, the height of the metal box is less the length and width of the metal box. This is especially preferable when performing cold compaction because of the friction generated between the mixed powder and the sides of the metal box. In one embodiment, the ratio of the height to the width of the metal box is at least 1: 2, 1: 2.5, or even 1:5; and no more than 1:100, or even 1:200.

Each plate will have a thickness, typically less than 1 inch (2.5 cm). The plates should be sufficiently thick to withstand the compaction and stress of hot working, but thin enough to minimize the clad thickness, and reduce the cost, weight and bulk of the resulting finished good. In one embodiment, the top forming plate and the bottom forming plate are the same thickness. In one embodiment, the top forming plate and the bottom forming plate are different thicknesses. In one embodiment, the bottom and opposing top forming plate are thinner than the pairs of side forming plates. In one embodiment, the bottom and opposing top plate are the same or thicker than the pairs of side forming plates. Exemplary thickness for each of the plates include at least 1 mm, 2 mm, 5 mm, 8 mm, 10 mm, 12 mm, or even 20 mm; and no greater than 50 mm, 100 mm, 125 mm, or even 200 mm.

Mixing

The metal powder and ceramic powder are uniformly mixed. In one embodiment, the mixed powder comprises at least 0.1, 0.5, 1, 5, 10, 20 or even 30% and at most 40, 50, 55, or even 60 % by mass of the ceramic powder. In the case of neutron shielding, since the active material is boron carbide, the more boron carbide present, the better. However, as the content of the ceramic powder increases, the deformation resistance for hot working increases, the workability becomes more difficult, and the formed article becomes more brittle. Additionally, the adhesion between the metal and ceramic particles becomes poor, and gaps can occur, thus not enabling the desired functions to be obtained and reducing the density, strength, and thermal conductivity of the resulting MMC. Furthermore, the cutting ability is also reduced as the ceramic content increases.

The metal powder may be of one type alone, or may be a mixture of a plurality of types, and the ceramic particles may likewise consist of one type alone or a plurality of types, such as by mixing in $B_4C$ and $Al_2O_3$. Likewise, the powders may comprise a monomodal or multimodal (e.g., bimodal) distribution of particle sizes.

Typically the average particle size of the metal powder and the ceramic powder will be selected for uniformity in the final material, and maximum processing ease (e.g. increase compressibility). For example, if the metal and ceramic powder have a similar density, it is preferable to match the metal powder particle size distribution with the ceramic particle size. This would allow the ceramic powder particles to be more evenly distributed in the resulting MMC, having a property stabilizing effect. If the average particle size becomes too large, it becomes difficult to achieve an even mixture with ceramic particles whose average particle size cannot be made too large due to a tendency to break, and if the average particle size becomes too small, the fine metal powder can clump together, making it extremely difficult to obtain an even mixture with the ceramic powder.

The powdered material is thoroughly mixed to insure substantially absolute uniformity. For this purpose, it is preferred to place the required amounts of powdered material in a power mixer and agitate until uniform distribution of one material throughout the other has been produced. The method of mixing as known in the art may be used, for example, using a mixer such as a cross-flow V-blender, a V blender or cross-rotary mixer, or a vibrating mill or planetary mill, for a designated time (e.g. 5 minutes to 10 hours). Additionally, media such as alumina balls or the like can be added for the purposes of crushing during mixture. Furthermore, mixing can be performed under dry or wet conditions. For example, to ease compaction or dust control a material, such as water, oil, solvents, dissolvents or other organic or inorganic compounds may be used.

Compaction

The completely mixed powder, which is a loose mixed powder having a first density is then placed into the metal box by over-filling the metal box with the mixed powder, wherein prior to said over-filling a riser frame or sleeve is placed over and/or around the metal box to contain the extra mixed powder, and compacted using pressure of at least 13.8 MPa (1 TSI) to generate a mixed powder having a second density, wherein the mixed powder is not subjected to sintering. After compaction, the compacted powder preform has a density ratio (or relative density) of at least 0.65, 0.68, 0.70, 0.73, 0.75, 0.78, or even 0.80; and no greater than 1.00. As used herein, the density ratio refers to the actual density of the mixed powder compared to the density of the same material completely free of porosity (i.e., assuming a fully dense material).

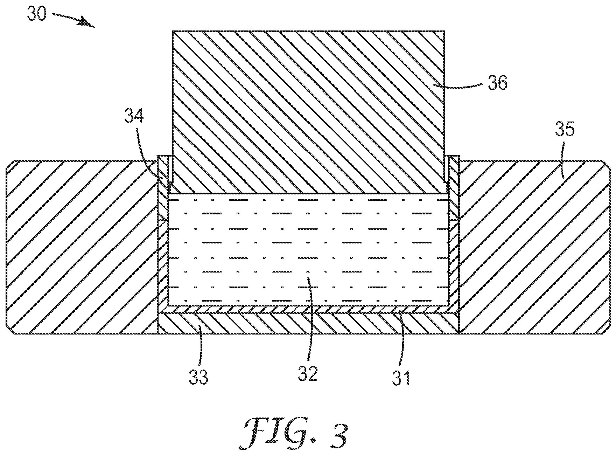

The metal box is placed within a die and the metal box is completely filled with the mixed powder. To insure that the powdered material is settled and to eliminate any substantial inclusion of air, the sides of the box may be struck with a mallet or hammer, or the filled container may be vigorously vibrated to accomplish the same purpose. A calculated amount of mixed powder is used such that upon compaction, ideally, the compacted mixed powder is level with the top surface of the metal box. Because the box is initially over-filled, a riser frame (or sleeve) is placed over the metal box, which is located within a die, to contain the extra mixed powder having a first density. See Fig. 3. The mixed powder is compacted within the metal box. As used herein compaction refers to the use of pressure (or force) to compact the powder, which increases the density of the material, while allowing the powder to remain in a solid state. In other words, the compaction not only rearranges the particles within the metal box to more tightly pack them, but it also deforms the particles enabling tighter packing. The particles are tighly packed preventing their displacement upon further handling and processing. However, no substantial melting of the metal powder occurs during the compaction step. Any method of compaction (i.e., application of pressure or force) may be used including for example, solid compaction, or cold uniaxial press. In one embodiment, a punch may be inserted into the die to compact the mixed powder.

Although not wanting to be limited by theory it is believed that the compaction not only densifies the material, but also "sets" the particles preventing their movement or flow during subsequent handling and processing, resulting in a uniform metal matrix composite. Thus, in one embodiment, the pressure (or force) should be substantial enough to set the mixed powder, preventing the settling or movement of the particles upon handling and/or processing. Typically, the materials can become more dense as more pressure is applied. In some applications, the ceramic particle can be crushed under the pressure of the compaction, which can diminish the resulting performance of the MMC. Typical pressures applied are at least 1 TSI (ton per square inch), 3 TSI, 5 TSI, 7 TSI, or even 9 TSI depending on the nature of the powders used. In some embodiments the pressure applies is no more than 10 TSI, 15 TSI, or even 20 TSI depending on the nature of the powders used.

In one embodiment vibration is used along with compaction. According to the invention, the mixed powder is not subjected to sintering.

Shown in Fig. 3 is a side-view of compaction assembly 30, showing metal box 31, mixed powder 32, die bottom plate 33, and die frame 35. Sleeve 34 serves as a riser for the over-filled mixed powder which is compacted with top punch 36.

The compaction of the mixed powder maximizes the amount of active material in a given part, improving the functionality of the resulting material. The compaction of the powders may also set the powders before hot working, forcing compaction and limiting deformation during the hot working step.

The filled metal box comprising the compacted mixed powder is then closed by a top forming plate, which is cut to the required dimensions. The top forming plate is in solid abutment with the metal box opposite the bottom forming plate. The top forming plate may be the same materials as described for the metal box. The top forming plate is sealed into place in a similar manner as sealing the bottom and side members of the metal box described above to form a pre-rolling assembly.

In one embodiment, small openings are provided on the sides to the pre-roll assembly for venting. For example, three ¼ inch (6 mm) holes are drilled and are then temporarily closed by the insertion of ¼ inch (6 mm) aluminum rivets. These rivets operate as plugs and hold the material in the pre-roll assembly until they are to be rolled. When the pre-roll assembly is to be rolled, the plugs are removed from the drilled holes to permit the escape of any entrapped air.

Hot working

The pre-rolling assembly is subjected to hot working such as hot rolling, hot extrusion, or hot forging, thus further improving the powder mixed density while simultaneously achieving the desired shape. When preparing a plate-shaped clad material, it is possible to obtain a clad plate material having a designated clad ratio with a metal plate material. The hot working may consist of a single procedure, or may be a combination of a plurality of procedures. Additionally, cold working may be performed after hot working. In the case of cold working, the material can be made easier to work by annealing at 100-530° C (preferably 400-520° C) prior to working.

In the case of hot rolling, typically the pre-roll assembly is first preheated to soften the metal before the hot working (e.g., hot rolling) step. The temperature used can vary depending on the composition of the mixed powder and the metal box. For example, when the mixed powder comprises more than 22% by weight of the ceramic powder, the preheating should be such that the temperatures used should be at least 90%, 92%, 94% or even 96% of the melting temperature of the metal powder but not greater than the metal box melting point. In one embodiment, the pre-rolling assembly for aluminum (AA1XXX series) is heated to lower the resistance of the material, such temperature include: at least 400°C, 450°C, or even 500°C; and at most 600°C, 620°C, or even 630 °C.

In one embodiment, the pre-roll assembly made of is stackloaded in a soaking furnace and preferably 1 inch spacers are provided between pre-roll assemblies to permit uniform heat-up from all sides. For example used, when aluminum is used, the furnace temperature is held at 400°C, or preferably 500°C or even as high as 600°C but not higher than 700°C and heated until the pre-roll assembly is heated to the required hot working temperature.

Since the pre-rolling assembly is clad by a metallic plate material, the surface will not have any ceramic particles that might otherwise be a point of origin for damage during hot working or wear down the dies, the rolls or any other equiptment touched by the material. As a result, it is possible to obtain a metal matrix composite material with good workability, excelling in strength and surface properties. Additionally the resulting material which has been subjected to hot working will have a surface clad with a metal, with good adhesion between the metal on the surface and the metal matrix material inside, thus having corrosion resistance, impact resistance and thermal conductivity superior to aluminum composite materials whose surfaces are not clad with a metallic material.

It will be understood that the hot working operation reduces not only the thickness of the mixture of ceramic powder and metal powder, but also reduces the thickness of the plates constituting opposite outer covers on the finished material. The finishing clad to core ratio is dependent on the starting thickness ratio of the top and bottom metal plate on the compacted powder. The metal sheathing on opposite sides of the MMC core varies from 5 to 75% of final total thickness achieved. The MMC core of course being formed of the molecular bonded particles of ceramic powder and metal powder, and being permanently molecularly bonded to the interior surfaces of the external sheathing.

While the precise dimensions can be varied as required, it is desirable to reduce the thickness of the pre-roll assembly, via the hot working step, to not more than 1/4th to 1/60th of its original thickness, and to reduce the metal sheathing at opposite sides of the rolled material to a thickness not thinner than 0.003 inch (0.07 mm).

In one embodiment, following the hot working step, the MMC material is flattened. For this purpose it may be thermal flattened under weights or it may be flattened using a coil set remover, roller leveler or any similar process. In one embodiment, the thermal flattening in an oven is preferred. To accomplish this, the MMC material is placed in stacks under heavy weights in an oven at a temperature of about 400°C. If not all the material is flattened at the end of the cycle, those pieces which are flat are removed and the balance are returned for flattening. In some cases, the MMC material will be flat after rolling and will not undergo a flattening treatment.

In one embodiment, the MMC material with the metal cladding has a thickness of at least 1 mm, 1.5 mm, 2 mm, 5 mm, 10 m, 15 mm, or even 20 mm; and at most 50 mm, 100 mm, or even 200 mm.

A guillotine shear, water jet cutting, or any other metal cutting process may be used to cut the MMC material to the required size for use.

In one embodiment, the MMC is removed from the metal cladding.

## EXAMPLES

Advantages and embodiments of this disclosure are further illustrated by the following examples. In these examples, all percentages, proportions and ratios are by weight (wt) unless otherwise indicated.

Materials

| Material | Source |
|---|---|
| Fine aluminum | Atomized, Spherical D50 = 16 microns, normal distribution, Aluminium Powder Company, Ltd., United Kingdom. |
| Coarse aluminum | Atomized, Spherical, D50 = 30 microns, normal distribution, Aluminium Powder Company, Ltd. |
| Fine boron carbide | Ball milled, F320(S), D50 = 11 microns, normal distribution, ESK Ceramics, Adrian, MI |
| Coarse boron carbide | Ball milled, F320(S), D50 = 40 microns, normal distribution, ESK Ceramics, Adrian, MI |
| Top and bottom plates | Hot rolled AA1100 (commercial pure) aluminum (0.250 inches thick (6 mm)), O-temper, Zhengzhou Mingtai Industry Co., Zhengzhou Henan, China |
| Side plates | Hot rolled AA1100 (commercial pure) aluminum (0.500 inches thick (12 mm)), O-temper, Alcoa Inc. Battendorf, IA |

Example

A metal box (inside dimensions of 6 inches (152 mm) in width x 10 inches (254 mm) in length x 2 inches (50.8 mm) high) was constructed by metal inert gas (MIG) welding 4 side plates and a bottom plate. The base material is chamfered 45°, ⅜ inch (9.5 mm) deep to optimize weld resistance. The weld is done using 1/16 inch (1.6 mm) AA1100 welding wire.

The aluminum powder comprised 30wt% fine aluminum and 70wt% coarse aluminum. The boron carbide powder comprised 30wt% fine boron carbide and 70wt% coarse boron carbide. 64wt% of the aluminum powder was blended with 36 wt% of the boron carbide powder for 10 minutes in a Patterson-Kelley crossflow V-blender (Buflovak LLC, Buffalo, NY) under a nitrogen atmosphere. Blended powder comprised 19.2wt% fine aluminum, 44.8wt% coarse aluminum, 10.8wt% fine boron carbide, and 25.2wt% coarse boron carbide. A predetermined amount of the mixed powder was placed in the metal box, wherein the mixed powder is not subjected to sintering. (7.30 lbs/box for no pressing (0 tons per square inch, TSI), 8.15 lbs/box at 3 TSI, and 8.80 lbs/box at 7 TSI.) Note: when doing compaction, the loose mixed powder overfills the metal box, therefore a sleeve is placed around the metal box to contain loose powder. The mixed powder is then compacted, if stated, at a given pressure using a 470T nominal compacting press (Accudyne Engineering & Equipment Co., Bell Gardens, CA). The metal box is placed in a 7 in x 11 in steel die, a 6 in x 10 in steel punch was placed on top. If compaction was performed, the applied force was either 180 tons (3 TSI) or 420 tons (7 TSI). Then, the sleeve was removed if used and a Top plate was placed on top of the box and MIG welded with AA1100 filler wire to make a pre-roll assembly. Vent holes (4 x ¼ in diameter holes) were drilled into opposing sides of the metal box. The pre-roll assembly was heat for 16 hours to 600°C ± 5°C in a convection furnace. The heated pre-roll assembly was then rolled using a 2-high Fenn reversing rolling mill (800 tons separating force). The pre-roll assembly was passed 13 times at a 22% reduction reducing the thickness from 2.5 inches (63.5 mm) to 0.100 inch (2.5 mm). Rolling coolant is applied on the 30 inch diameter steel rolls between each pass. Two cross-rolls (widthwise rolling) are done at passes 3 and 4. The resulting articles are allowed to cool to room temperature.

Shown in Table 1 below are the results of the resulting MMC articles. For each applied pressure, 2 or 3 samples were prepared and measured as described below and the average is reported in Table 1. The Density ratio before hot rolling is calculated by dividing the weight of the mixed powder used by the volume of the metal box then dividing by the theoretical density of the mixed powder assuming fully dense material (which is 2.63 g/cm$^3$). The Measured core fraction is determined from a micrograph of the resulting article by dividing the area of the MMC to the total area of the article and multiplying by 100 to yield a percentage. The $^{10}$B isotope areal density was calculated based on the amount of boron carbide used versus the thickness of the MMC using the equation (adapted from Turner & Thomas, Nuclear Technology, Vol. 169 (2010)):

$$^{10}B_{AD} = FB_4C \times \rho_{core} \times FB \times F^{10}B \times T_{material} \times (1 - F_{clad})$$

Where $^{10}B_{AD}$ is the $^{10}$B isotope areal density;
$FB_4C$ is the amount of boron carbide used (0.36);
$\rho_{core}$ is the core density (2632 mg/cm$^3$);
FB is the boron proportion in boron carbide (0.7826);
$F^{10}B$ is the fraction of $^{10}$B in natural boron (0.184);
$T_{material}$ is the thickness of the material (2.60 cm); and
$F_{clad}$ is the clad proportion (measured core fraction).

Table 1

| Applied pressure | Number of samples | Density ratio before hot rolling | Measured core fraction | $^{10}$B isotope areal density (mg/cm$^2$) |
|---|---|---|---|---|
| 0 TSI | 3 | 0.63* | 72.6% | 25.8 |
| 3 TSI | 3 | 0.70 | 76.1% | 27.0 |
| 7 TSI | 2 | 0.76 | 78.0% | 27.7 |
| * the density ratio of the mixed powder when first dropped into the metal box is about 0.45, however, upon handling, the mixed powder settles prior to the hot working step. | | | | |

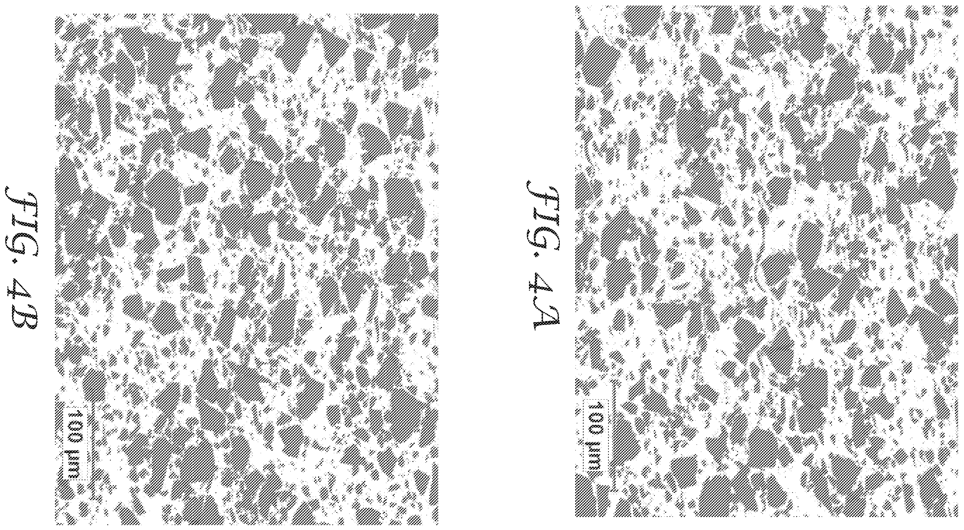

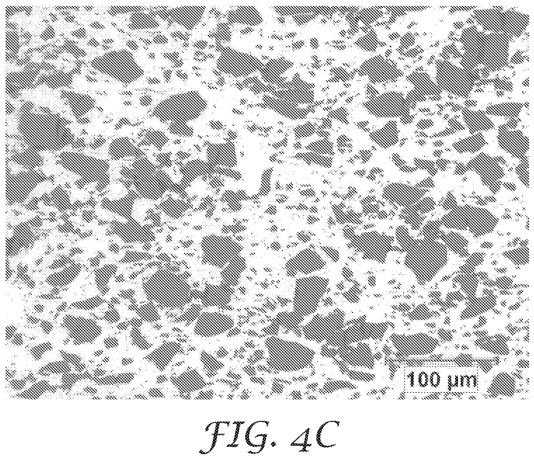

A micrograph of the resulting material is presented in Fig. 4, where (A) is the metal matrix composite material composite not compacted (0 TSI), (B) is the metal matrix composite material compacted at 3 TSI, and (C) is the metal matrix material compacted at 7 TSI. In the micrographs, the boron carbide (ceramic) particles are in dark grey while the metal (aluminum) is white. It is noted that in Fig. 4A, narrow curved horizontally oriented dark patterns are observed, which are thought to be flow patterns attributed to powder movement of loose powder during hot rolling. It is also noted that in Fig. 4C, some of the boron carbide particles are lumped together and/or broken.

**Claims**

1. A method for making a metal matrix composite material comprising:

    (a) forming a metal box comprising a bottom forming plate having a length and a width, a first pair of side forming plates having a length and a height, and a second pair of side forming plates having a width and a height;
    (b) mixing a metal powder and a ceramic powder to prepare a mixed powder;
    (c) over-filling the metal box with the mixed powder, wherein prior to said over-filling a riser frame or sleeve is placed over and/or around the metal box to contain the extra mixed powder;
    (d) after said over-filling, compacting the mixed powder in the metal box by applying pressure or force of at least 13.8 MPa (1 TSI) to provide the metal box comprising a compacted powder preform, wherein the mixed powder is not subjected to sintering and the compacted powder preform has a density ratio of at least 0.65 where the density ratio is calculated by dividing the weight of the mixed powder by the volume of the metal box then dividing by the theoretical density of the mixed powder assuming a fully dense material;
    (e) removing riser frame or sleeve and then disposing a top forming plate onto the metal box in solid abutment against the metal box comprising the compacted powder preform and sealing around its edges to produce an assembly; and
(f) performing hot working on the assembly to obtain the metal matrix composite material with a metal cladding.

2. The method of claim 1, wherein the compacting step is preformed using at least one of: solid compaction with pressure or force, and cold uniaxial press.

3. The method of any one of the previous claims, wherein ratio of the height to the width of the metal box is at least 1:2.5.

4. The method of any one of the previous claims, wherein the metal box is selected from at least one of aluminum, magnesium, and stainless steel.

5. The method of any one of the previous claims, wherein the metal powder is selected from at least one of aluminum, magnesium, and stainless steel.

6. The method of any one of the previous claims, wherein the ceramic powder comprises boron carbide.

7. The method of any one of the previous claims, wherein the bottom forming plate, top forming plate, and side forming plates have a thickness of at least 2 mm.

8. The method of any one of the previous claims, wherein the thickness of the assembly is reduced by rolling to at least 1/4th of its original thickness.

9. The method of any one of the previous claims, wherein the assembly is heated within at least 90% of the melting temperature of the metal powder.

10. The method of any one of the previous claims, wherein the assembly is pre-heated prior to the hot working.

11. The method of any one of the previous claims, wherein the hot working is selected from at least one of hot rolling, hot extrusion, and hot forging.

12. The method of any one of the previous claims, wherein the mixed powder comprises at least 20% and at most 60% by mass of the ceramic powder.

**Patentansprüche**

1. Verfahren zur Herstellung eines Metallmatrix-Verbundmaterials, wobei das Verfahren Folgendes umfasst:

(a) Bilden eines Metallkastens, der Folgendes umfasst: eine Bodenformplatte mit einer Länge und einer Breite, ein erstes Paar von Seitenformplatten mit einer Länge und einer Höhe und ein zweites Paar von Seitenformplatten mit einer Breite und einer Höhe;
(b) Mischen eines Metallpulvers und eines Keramikpulvers, um ein gemischtes Pulver herzustellen;
(c) Überfüllen des Metallkastens mit dem gemischten Pulver, wobei vor dem Überfüllen ein Steigrohrrahmen oder eine Steigrohrhülse über und/oder um den Metallkasten gelegt wird, um das zusätzliche gemischte Pulver aufzunehmen;
(d) nach dem Überfüllen Verdichten des Pulvergemisches in dem Metallkasten durch Aufbringen eines Drucks oder einer Kraft von mindestens 13,8 MPa (1 TSI), um den Metallkasten mit einem verdichteten Pulver-Vorformling bereitzustellen, wobei das gemischte Pulver nicht gesintert wird und der verdichtete Pulver-Vorformling ein Dichteverhältnis von mindestens 0,65 aufweist, wobei das Dichteverhältnis berechnet wird, indem das Gewicht des gemischten Pulvers durch das Volumen des Metallkastens dividiert und dann durch die theoretische Dichte des gemischten Pulvers dividiert wird, wobei ein vollständig dichtes Material angenommen wird;
(e) Entfernen des Steigrohrrahmens oder der Steigrohrhülse und anschließendes Anordnen einer oberen Formplatte auf dem Metallkasten in fester Anlage an dem Metallkasten, der den verdichteten Pulver-Vorformling enthält, und Abdichten um seine Ränder, um eine Baugruppe herzustellen; und
(f) Heißbearbeiten der Baugruppe, um das Metallmatrix-Verbundmaterial mit einem Metallmantel zu erhalten.

2. Verfahren nach Anspruch 1, wobei der Verdichtungsschritt unter Verwendung von mindestens einem der Folgenden durchgeführt wird:
Feste Verdichtung mit Druck oder Kraft und uniaxiale Kaltpressung.

3.  Verfahren nach einem der vorhergehenden Ansprüche, wobei das Verhältnis der Höhe zur Breite des Metallkastens mindestens 1:2,5 beträgt.

4.  Verfahren nach einem der vorhergehenden Ansprüche, wobei der Metallkasten aus Aluminium, Magnesium und/oder Edelstahl ausgewählt ist.

5.  Verfahren nach einem der vorhergehenden Ansprüche, wobei das Metallpulver aus Aluminium, Magnesium und/oder Edelstahl ausgewählt ist.

6.  Verfahren nach einem der vorhergehenden Ansprüche, wobei das Keramikpulver Borcarbid umfasst.

7.  Verfahren nach einem der vorhergehenden Ansprüche, wobei die Bodenformplatte, die obere Formplatte und die Seitenformplatten eine Dicke von mindestens 2 mm aufweisen.

8.  Verfahren nach einem der vorhergehenden Ansprüche, wobei die Dicke der Anordnung durch Walzen auf mindestens 1/4 ihrer ursprünglichen Dicke verringert wird.

9.  Verfahren nach einem der vorhergehenden Ansprüche, wobei die Anordnung innerhalb von mindestens 90% der Schmelztemperatur des Metallpulvers erwärmt wird.

10. Verfahren nach einem der vorhergehenden Ansprüche, wobei die Anordnung vor dem Warmbearbeiten vorgewärmt wird.

11. Verfahren nach einem der vorhergehenden Ansprüche, wobei das Warmbearbeiten aus Warmwalzen, Warmextrusion und/oder Warmschmieden ausgewählt wird.

12. Verfahren nach einem der vorhergehenden Ansprüche, wobei das gemischte Pulver mindestens 20 Massen-% und höchstens 60 Massen-% des Keramikpulvers umfasst.


**Revendications**

1.  Procédé d'élaboration d'un matériau composite à matrice métallique comprenant :

    (a) le formage d'un caisson métallique comprenant une plaque formant un fond ayant une longueur et une largeur, une première paire de plaques formant des côtés ayant une longueur et une hauteur, et une deuxième paire de plaques formant des côtés ayant une largeur et une hauteur ;
    (b) le mélangeage d'une poudre métallique et d'une poudre de céramique pour préparer une poudre mélangée ;
    (c) le sur-remplissage du caisson métallique avec la poudre mélangée, dans lequel avant ledit sur-remplissage un manchon ou un cadre élévateur est placé au-dessus et/ou autour du caisson métallique afin de contenir la poudre mélangée excédentaire ;
    (d) après ledit sur-remplissage, le compactage de la poudre mélangée dans le caisson métallique grâce à l'application d'une pression ou d'une force d'au moins 13,8 MPa (1 TSI) pour fournir le caisson métallique comprenant une préforme de poudre compactée, dans lequel la poudre mélangée n'est pas soumise au frittage et la préforme de poudre compactée a un rapport de densité d'au moins 0,65 où le rapport de densité est calculé en divisant le poids de la poudre mélangée par le volume du caisson métallique puis en divisant la densité théorique de la poudre mélangée en supposant un matériau entièrement dense ;
    (e) l'enlèvement du manchon ou du cadre élévateur et ensuite la disposition d'une plaque formant le haut sur le caisson métallique en butée solide contre le caisson métallique comprenant la préforme de poudre compactée et l'étanchéisation autour de ses bords afin de produire un ensemble ; et
    (f) la réalisation d'un travail à chaud sur l'ensemble afin d'obtenir le matériau composite à matrice métallique avec un parement métallique.

2.  Procédé de la revendication 1, dans lequel l'étape de compactage est réalisée en utilisant au moins un moyen parmi : un compactage solide à l'aide d'une pression ou d'une force, et une presse uni-axiale à froid.

3. Procédé de l'une quelconque des revendications précédentes, dans lequel le rapport de la hauteur à la largeur du caisson métallique est au moins de 1:2,5.

4. Procédé de l'une quelconque des revendications précédentes, dans lequel le caisson métallique est sélectionné parmi au moins une des substances : l'aluminium, le magnésium, et l'acier inoxydable.

5. Procédé de l'une quelconque des revendications précédentes, dans lequel la poudre métallique est sélectionnée parmi au moins une des substances : l'aluminium, le magnésium, et l'acier inoxydable.

6. Procédé de l'une quelconque des revendications précédentes, dans lequel la poudre de céramique comprend du carbure de bore.

7. Procédé de l'une quelconque des revendications précédentes, dans lequel la plaque formant le fond, la plaque formant le haut, et les plaques formant les côtés ont une épaisseur d'au moins 2 mm.

8. Procédé de l'une quelconque des revendications précédentes, dans lequel l'épaisseur de l'ensemble est réduit grâce à un laminage jusqu'à au moins 1/4 de son épaisseur initiale.

9. Procédé de l'une quelconque des revendications précédentes, dans lequel l'ensemble est chauffé dans les limites d'au moins 90 % de la température de fusion de la poudre métallique.

10. Procédé de l'une quelconque des revendications précédentes, dans lequel l'ensemble est pré-chauffé avant le travail à chaud.

11. Procédé de l'une quelconque des revendications précédentes, dans lequel le travail à chaud est sélectionné parmi au moins une des opérations : le laminage à chaud, l'extrusion à chaud et le forgeage à chaud.

12. Procédé de l'une quelconque des revendications précédentes, dans lequel la poudre mélangée comprend au moins 20 % et au maximum 60 % en masse de la poudre de céramique.

10 → 18

12

15

$\mathcal{FIG}.\ 1$

25b

23a

20 →

h

25a    21    23b

l    w

$\mathcal{FIG}.\ 2$

FIG. 3

*FIG. 4A*

*FIG. 4B*

*FIG. 4C*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009054075 A
- US 7998401 B, Okaniwa

**Non-patent literature cited in the description**

- **TURNER ; THOMAS.** *Nuclear Technology,* 2010, vol. 169